# EUROPÄISCHE PATENTANMELDUNG

(11) **EP 1 505 808 A1**
(43) Veröffentlichungstag der Anmeldung: **09.02.2005**
(21) Anmeldenummer: 03018167.1
(22) Anmeldetag: 08.08.2003
(51) Int. Cl.: H04M 1/677, H04M 1/2745, H04M 1/725

(54) **Mobiles Kommunikationsendgerät für Kinder**

(71) Anmelder: SIEMENS AKTIENGESELLSCHAFT, 80333 München (DE)
(72) Erfinder: Könning, Jörg, 46487 Wesel (DE)

(57) **Zusammenfassung**

Bei einem mobilen Kommunikationsendgerät für Kinder mit einer Sende-/Empfangseinrichtung für Kommunikationsverbindungen, einem Mikrophon (2), einem Lautsprecher (1) und einer Mehrzahl an Tasten zur Bedienung des Kommunikationsendgerätes, wird die Aufgabe, es besonders kindgerecht auszuführen, dadurch gelöst, dass wenigstens ein Teil der Tasten als Ruftasten (6,7,8) ausgebildet ist, wobei jeder Ruftaste (6,7,8) eine Rufnummer aus einer abgeschlossenen Gruppe von Rufnummern, die jeweiligen Teilnehmern zugehörig sind, zugeordnet ist und jede Ruftaste (6,7,8) sowohl zum Auslösen als auch zur Annahme eines Rufs zu/von dem zugeordneten Teilnehmer eingerichtet ist.

## Beschreibung

Die Erfindung bezieht sich auf ein mobiles Kommunikationsendgerät für Kinder mit einer Sende-/Empfangseinrichtung für Kommunikationsverbindungen, einem Mikrophon, einem Lautsprecher und einer Mehrzahl Tasten zur Bedienung des Kommunikationsendgerätes.

Der Vorteil einer sehr guten Erreichbarkeit einer Person, die mit einem mobilen Kommunikationsendgerät ausgestattet ist, machen sich häufig auch Eltern oder andere Bezugspersonen von Kindern zu nutze, um eine verbesserte Erreichbarkeit ihres Kindes zu schaffen. Zu diesem Zweck überlassen Eltern in zunehmendem Maße ihren Kindern mobile Kommunikationsendgeräte, bei denen es sich allerdings um handelsübliche Geräte handelt, die speziellen Anforderungen hinsichtlich ihrer Bedienbarkeit für Kinder nicht in ausreichendem Maße gerecht werden.

Ausgehend hiervon liegt der Erfindung die Aufgabe zugrunde, ein kindgerechtes mobiles Kommunikationsendgerät zu schaffen.

Diese Aufgabe wird bei dem eingangs genannten mobilen Kommunikationsendgerät dadurch gelöst, dass wenigstens ein Teil der Tasten als Ruftasten ausgebildet ist, wobei jeder Ruftaste eine Rufnummer aus einer abgeschlossenen Gruppe von Rufnummern, die jeweiligen Teilnehmern zugehörig sind, zugeordnet ist und jede Ruftaste sowohl zum Auslösen als auch zur Annahme eines Rufs zu/von dem zugeordneten Teilnehmer eingerichtet ist.

Bei dem mobilen Kommunikationsendgerät für Kinder wird die Bedienbarkeit dadurch vereinfacht, dass ein und dieselbe Ruftaste, die einem bestimmten Teilnehmer zugeordnet ist, sowohl zum Auslösen eines Rufs als auch zur Annahme verwendbar ist. Im Gegensatz dazu ist es bei handelsüblichen mobilen Kommunikationsendgeräten üblich, eine Annahmetaste von einer Ruftaste zu trennen.

Ein besonderes Merkmal des mobilen Kommunikationsendgerätes ist in erster Linie sicherheitsrelevant und sieht vor, dass jeder Ruftaste eine bestimmte Rufnummer zugeordnet ist. Dies hat den Vorteil, dass Rufe von Teilnehmern außerhalb der abgeschlossenen Gruppe von Rufnummern durch das mobile Kommunikationsendgerät nicht angenommen werden können. Es wird somit ausgeschlossen, dass Dritte eine Kommunikationsverbindung zu dem mobilen Kommunikationsendgerät herstellen können.

Bevorzugt ist das Kommunikationsendgerät derart ausgebildet, dass eine aktive Kommunikationsverbindung mit einer der Rufnummern aus der abgeschlossenen Gruppe von Rufnummern ausschließlich von dem dieser Rufnummer zugeordneten Teilnehmer zu beenden ist. Anders ausgedrückt, wird bei dem mobilen Kommunikationsendgerät für Kinder gewollt auf eine Taste verzichtet, mit der sich eine Kommunikationsverbindung unterbrechen lässt. Daraus ergibt sich der Vorteil, dass eine Beendigung einer Kommunikationsverbindung ausschließlich im Einflussbereich eines der zugeordneten Teilnehmer liegt. Eine einmal aufgebaute Kommunikationsverbindung kann auch nicht durch ungewollte Betätigung einer der Tasten des mobilen Kommunikationsendgerätes beendet werden.

Zur Veranschaulichung der möglichen Gesprächspartner, mit denen Gesprächsverbindungen aufzubauen sind, ist es von Vorteil, wenn jede Taste mit einer namentlichen/bildlichen Wiedergabe desjenigen Teilnehmers versehen ist, dessen Rufnummer der Ruftaste zugeordnet ist. Diese Maßnahme erhöht die Bedienungsfreundlichkeit des mobilen Kommunikationsendgerätes für Kinder. Bei einer bildlichen Wiedergabe wird das Kommunikationsendgerät selbst für Kinder bedienbar, die noch nicht über ausreichende Lese-/Schreibkenntnisse verfügen.

Zum Versehen der Ruftasten mit einer namentlichen/bildlichen Wiedergabe der Teilnehmer ist es besonders günstig wenn die Ruftasten durchsichtig ausgeführt sind und die Wiedergabe auf einer jeweiligen Innenseite der Ruftasten vorgesehen ist, wobei die Ruftasten lösbar befestigt sind. Insofern lassen sich die Ruftasten von dem mobilen Kommunikationsendgerät abnehmen, mit den Wiedergaben der Teilnehmer versehen und im Anschluss daran wieder an dem Kommunikationsendgerät befestigen. Alternativ ist es auch möglich, die Ruftasten von einer Innenseite des mobilen Kommunikationsendgerätes zugänglich zu machen, so dass bei einer Demontage des mobilen Kommunikationsendgerätes in eine Oberschale und eine Unterschale die Wiedergaben auf die Innenseiten der Ruftasten aufgebracht werden können.

Bei einer bevorzugten Ausführungsform des mobilen Kommunikationsendgerätes für Kinder können insgesamt drei Ruftasten vorgesehen sein, wobei beispielsweise zwei Ruftasten den Eltern und eine Ruftaste einem weiteren Verwandten des Kindes zugeordnet sind. Eine solche Ausstattung des mobilen Kommunikationsendgerätes gewährleistet eine sichere Erreichbarkeit für dessen wichtigste Bezugspersonen. Selbstverständlich ist es auch möglich, weitere Ruftasten, denen jeweils ein bestimmter Teilnehmer zugeordnet ist, vorzusehen, wobei der Teilnehmerkreis zusätzlich Personen aus einem Freundeskreis des Kindes umfasst.

Für eine günstige Verständlichkeit von Sprachsignalen auf Seiten des mobilen Kommunikationsendgerätes ist es von Vorteil, wenn sowohl das Mikrophon als auch der Lautsprecher jeweils für einen Freisprechbetrieb ausgelegt sind. Der Freisprechbetrieb ist dann der einzige Betriebsmodus für das Mikrophon und den Lautsprecher, d. h. eine sonst bei mobilen Kommunikationsendgeräten erforderliche Umschaltung von Normalbetrieb zur Freisprechbetrieb entfällt.

Zur verbesserten Wahrnehmung eines eingehenden Rufs bei dem mobilen Kommunikationsendgerät ist vorzugsweise für eine Lautstärkeregelung des Lautsprechers eine von Null verschiedene Untergrenze festgelegt. Die Untergrenze sollte dabei derart festgelegt sein, dass ein eingehender Anruf selbst dann für das Kind wahrnehmbar ist, wenn es das mobile Kommunikationsendgerät beispielsweise gerade in seiner Hosentasche aufbewahrt. Das Kommunikationsendgerät kann zur Verwirklichung der Lautstärkeregelung zwei Knöpfe aufweisen, von denen die eine zum Erhöhen und die andere zum Vermindern der Lautstärke des Lautsprechers dient, wobei jedoch die Untergrenze nicht unterschritten wird.

Zur Erhöhung der Funktionalität des Kommunikationsendgerätes kann es eine Zeitanzeigeeinrichtung aufweisen.

Um eine unberechtigte Einflussnahme auf die Zuordnung zwischen den Rufnummern der Ruftasten und den zugeordneten Teilnehmern möglichst zu erschweren, ist es von Vorteil, wenn das Kommunikationsendgerät derart ausgeführt ist, dass zur Festlegung/Änderung der Rufnummern für die Ruftasten eine Eingabe mindestens eines Passwortes erforderlich ist.

Diese Festlegung kann mit weiteren Tasten des mobilen Kommunikationsendgerätes selbst erfolgen, die keine Ruftasten sind. Bevorzugt verfügt das mobile Kommunikationsendgerät jedoch über eine geeignete Schnittstelle, die es gestattet, einschlägige Daten über die Rufnummernzuordnung und ggf. auch über Lautstärkeeinstellungen, Zeiteinstellungen und den Ruftasten zugeordneten Klingeltönen von einem externen Computersystem aus vorzunehmen.

Bevorzugt ist das mobile Kommunikationsendgerät zum Aussenden und zum Empfangen von Kurzmitteilungen ausgeführt. Dabei wird es als bevorzugt angesehen, dass das Kommunikationsendgerät eine Erfassungseinrichtung aufweist, die feststellt, ob eine beabsichtigte Kommunikationsverbindung zu einem der Teilnehmer hergestellt werden kann und eine Aussendung einer Kurzmitteilung zu diesem Teilnehmer auslöst, wenn die Kommunikationsverbindung nicht hergestellt werden kann. Daraus ergibt sich der Vorteil, dass der gewünschte Teilnehmer bei Auslösung eines Rufes auf Seiten des mobilen Kommunikationsendgerätes in jedem Fall eine Mitteilung erhält, aus der er schließen kann, dass eine Kommunikationsverbindung gewünscht ist. Die ausgesandte Kurzmitteilung kann vorzugsweise Positionsinformationen des Kommunikationsendgerätes enthalten, die beispielsweise mit Hilfe einer GPS-Einrichtung gewonnen werden können, mit der das Kommunikationsendgerät ausgestattet ist. Alternativ können sich die Positionsinformationen auch aus den Mobilfunkzellendaten ergeben, die derjenigen Mobilfunkzelle zugehörig sind, in der sich das Kommunikationsendgerät aktuell befindet.

Nach einer weiteren Ausführungsform kann das Kommunikationsendgerät derart ausgeführt sein, dass es bei Empfang einer Kurzmitteilung von einem der Teilnehmer automatisch eine Kommunikationsverbindung zu diesem Teilnehmer herstellt. Dies bedeutet, dass in dem Fall, wenn das Kind einen eingehenden Ruf von einem der Teilnehmer aus der abgeschlossenen Gruppe erhält, jedoch nicht entgegennimmt, trotzdem eine Kommunikationsverbindung aufgebaut wird.

Zur Verminderung eines Leistungsbedarfs für das mobile Kommunikationsendgerät ist es von Vorteil, wenn es hinsichtlich Zeitintervallen zwischen Zeitpunkten, zu denen es sich automatisch bei dem ihm zugeordneten Mobilkommunikationsnetzwerk anmeldet, einstellbar und zur Abfrage von Kurzmitteilungen zu diesen Zeitpunkten ausgeführt ist. Auf diese Weise wird ein Energiebedarf des Kommunikationsendgerätes vermindert, gleichzeitig aber die Erreichbarkeit für Kurzmitteilungen in ausreichendem Maße gewährleistet. In diesem Zusammenhang kann ein abgehender Ruf zu einem der Teilnehmer unmittelbar eine Anmeldung des mobilen Kommunikationsendgerätes am Mobilfunknetzwerk auslösen, so dass für diesen Anwendungsfall eine durchgehende Erreichbarkeit vorhanden ist.

Alternativ ist es auch möglich, dass das mobile Kommunikationsendgerät permanent an dem ihm zugeordneten Mobilfunknetzwerk angemeldet ist. Auf diese Weise lässt sich eine zeitlich lückenlose Erreichbarkeit des Kommunikationsendgerätes erzielen, allerdings zu Lasten seines Leistungsbedarfs.

Das Kommunikationsendgerät kann zum Erfassen eines Eingangs einer Kurzmitteilung ausgebildet sein. Daraus ergibt sich, dass in dem Fall, wenn zu den oben angesprochenen Zeitpunkten keine Kurzmitteilungen vorliegen, das mobile Kommunikationsendgerät unmittelbar seine Abmeldung an dem Mobilkommunikationsnetzwerk herbei führen kann.

Zur Verbesserung einer Sperrwirkung des Kommunikationsendgerätes gegenüber fremden Rufen, die sowohl Sprachverbindungen als auch Kurzmitteilungen sein können, kann es vorzugsweise eine Vergleichseinrichtung zum Vergleichen von Rufnummern eingehender Rufe und denen den Ruftasten zugeordneten Rufnummern aufweisen.

Es wird als bevorzugt angesehen, dass die Ruftasten wenigstens teilweise außerdem zum Beenden einer Kommunikationsverbindung ausgeführt sind. Beispielsweise bei Kindern fortgeschrittenen Alters wird es wünschenswert sein, ihnen die Möglichkeit zu verschaffen, gegenüber bestimmten Teilnehmern, denen Ruftasten zugeordnet sind, eine Kommunikationsverbindung selbst zu beenden. Dabei kann unter den Ruftasten zwischen Ruftasten differenziert werden, bei denen eine Kommunikationsverbindung von Seiten des Kommunikationsendgerätes aus nicht zu beenden ist (Hauptbezugspersonen des Kindes, wie z.B. die Eltern), und Ruftasten, denen Personen aus einem Freundeskreis des Kindes zugeordnet sind und bei denen eine Verbindungsunterbrechung möglich ist.

In diesem Zusammenhang wird es als vorteilhaft angesehen, dass das Kommunikationsendgerät derart ausgebildet ist, dass eine Freischaltung einer der Ruftasten ausschließlich von extern vorgenommen werden kann. Auf diese Weise wird sichergestellt, dass allein durch Handhabung der Tasten des Kommunikationsendgerätes eine Freischaltung einer Ruftaste für eine Beendigung einer Kommunikationsverbindung nicht vonstatten gehen kann. Dies ist ausschließlich von extern aus möglich, beispielsweise mit Hilfe der bereits oben erläuterten Schnittstelle.

Für den Fall, dass zwei gleichartige Kommunikationsendgeräte der hier dargestellten Art miteinander eine Kommunikationsverbindung aufbauen wollen, ist es von Vorteil, wenn jedes dieser Kommunikationsendgeräte zum Feststellen einer Funktionalität zur Beendigung einer Kommunikationsverbindung zu dem anderen Kommunikationsendgerät ausgeführt ist. Sonst könnte der Fall eintreten, dass eine einmal aufgebaute Kommunikationsverbindung nicht mehr zu trennen ist, nämlich dann, wenn beide an der Kommunikationsverbindung beteiligte Kommunikationsendgeräte keine Funktionalität zur Beendigung einer Kommunikationsverbindung besitzen. Zu diesem Zweck können gesonderte Kennungen, die das Vorliegen der Funktionalität wiedergeben, von dem Kommunikationsendgerät zielgerichtet verarbeitet werden.

Es ist hervorzuheben, dass die in den Ansprüchen 2 bis 7 dargelegten bevorzugten Weiterbildungen der Erfindung über eigenen erfinderischen Charakter verfügen, so dass die dort niedergelegten Merkmale sowohl in Verbindung mit den Merkmalen des Patentanspruchs 1 als auch für sich allein als Erfindung angesehen werden können. Dies gilt insbesondere für die Patentansprüche 2, 6, 7, 8, 12 und 14.

Ausführungsbeispiele der Erfindung werden nachfolgend anhand der Zeichnungen noch näher erläutert. Es zeigen:
- Figur 1: eine Draufsicht auf ein mobiles Kommunikationsendgerät für Kinder,
- Figur 2: eine Seitenansicht des mobilen Kommunikationsendgerätes von Figur 1,
- Figur 3: eine Veranschaulichung einer Signalisierung eines einkommenden Rufs für das mobile Kommunikationsendgerät von Figur 1,
- Figur 4: eine schematische Darstellung eines Ablaufs bei einem von einem Teilnehmer initiierten Ruf für das mobile Kommunikationsendgerät von Figur 1,
- Figur 5: eine schematische Darstellung eines Ablaufs für einen Ruf, der von dem mobilen Kommunikationsendgerät aus ausgelöst wird, wobei ein gerufener Teilnehmer erreichbar ist,
- Figur 6: eine schematische Darstellung eines Ablaufs für einen Ruf, der von dem mobilen Kommunikationsendgerät aus ausgelöst wird, wobei ein gerufener Teilnehmer nicht erreichbar ist und
- Figur 7: eine schematische Darstellung eines Ablaufs für einen Ruf, der von einem Teilnehmer ausgelöst wird, wobei auf Seiten des mobilen Kommunikationsendgerätes eine Annahme nicht erfolgt.

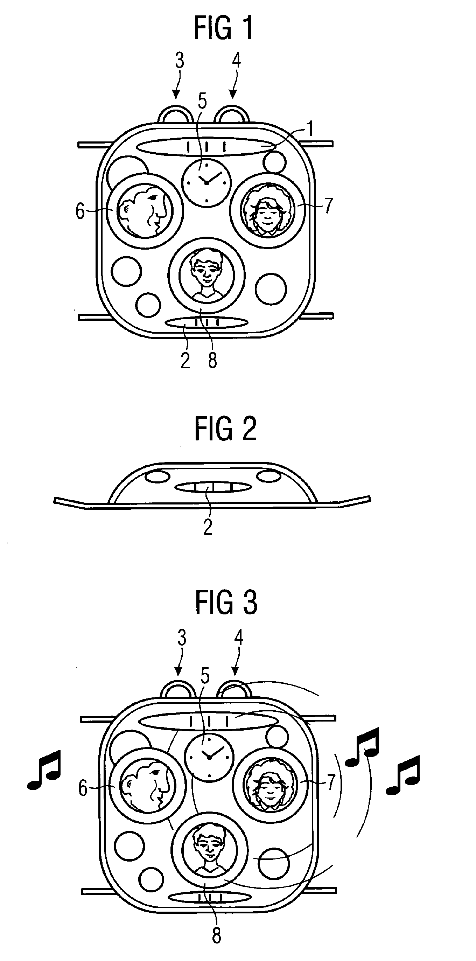

Figur 1 zeigt ein ähnlich einer Armbanduhr tragbares mobiles Kommunikationsendgerät, das sich durch eine besondere Bedienungsfreundlichkeit aber auch durch eine sichere Erreichbarkeit für Kinder auszeichnet. Das mobile Kommunikationsendgerät weist einen Lautsprecher 1 und ein Mikrophon 2 auf, die jeweils für einen Freisprechbetrieb ausgelegt sind. Dem Lautsprecher 1 ist eine Lautstärkeregelung zugeordnet, die über zwei gummierte Knöpfe 3, 4 betätigt wird, wobei einer der Knöpfe 3 zur Verminderung der Lautstärke und der andere 4 zur Erhöhung der Lautstärke dient. Eine Druckbetätigung der Knöpfe 3, 4 bewirkt jeweils eine Lautstärkeänderung um ein vorgegebenes Lautstärkeintervall. Für die Lautstärke des mobilen Kommunikationsendgerätes ist eine Untergrenze vorgesehen, die auch nicht durch Betätigung des Knopfes 3 unterschritten werden kann. Ein Wert für die Lautstärke dieser Untergrenze ist so bemessen, dass eine Wahrnehmung eines eingehenden Rufs, der über den Lautsprecher mit Hilfe eines Klingeltons angezeigt wird, gewährleistet wird.

Außerdem weist das mobile Kommunikationsendgerät eine analoge Zeitanzeigeeinrichtung 5 auf, die den Funktionalitätsumfang des Kommunikationsendgerätes erweitert. Die Zeitanzeigeeinrichtung 5 vervollständigt die Ausführung des mobilen Kommunikationsendgerätes als kindgerechtetes Gerät.

Das Kommunikationsendgerät weist insgesamt drei Ruftasten 6, 7, 8 auf, die jeweils als Anrufschalter ausgebildet sind. Jeder der Ruftasten 6, 7, 8 ist eine Rufnummer einer Bezugsperson des Kindes zugeordnet, wobei jede Ruftaste 6, 7, 8 sowohl zum Auslösen eines Rufs an die zugeordnete Bezugsperson als auch zur Annahme eines von der Bezugsperson kommenden Rufs dient. Im veranschaulichten Ausführungsbeispiel ist jede der Ruftasten 6, 7, 8 lösbar befestigt und transparent. Darüber hinaus weist jede Ruftaste 6, 7, 8 die äußere Form eines kreisrunden Plättchens auf, auf dessen Innenseite eine bildliche Darstellung, beispielsweise ein Portrait, derjenigen Bezugsperson vorgesehen ist, die der jeweiligen Ruftaste 6, 7, 8 zugeordnet ist.

Das mobile Kommunikationsendgerät ist derart ausgelegt, dass es ausschließlich Anrufe von den drei Rufnummern annehmen kann, die den drei Ruftasten 6, 7, 8 zugeordnet sind. Sämtliche fremden Anrufe sind gesperrt. Zu diesem Zweck ist eine Vergleichseinrichtung (in Software ausgeführt) vorgesehen, die Rufnummern von bei den mobilen Kommunikationsendgerät eingehenden Rufen mit den Rufnummern vergleicht, die den Ruftasten 6, 7, 8 zugeordnet sind. Wird eine Übereinstimmung nicht festgestellt, wird der ankommende Ruf gesperrt, d. h. ist nicht annehmbar.

Das mobile Kommunikationsendgerät ist derart ausgelegt, dass mit Hilfe eines extern ablaufenden Programms über eine Schnittstelle (nicht dargestellt) Einstellungen vorgenommen werden können. Zu diesen Einstellungen gehört eine Zuordnung der Ruftasten 6, 7, 8 zu den jeweils maßgeblichen Rufnummern, bei denen es sich sowohl um Mobilfunkrufnummern als auch um Festnetzrufnummern handeln kann. Eingabemittel zur unmittelbaren Steuerung der Funktionalitäten des mobilen Kommunikationsendgerätes sind bei diesem nicht vorgesehen. Für die Zuordnung zwischen den Ruftasten 6, 7, 8 und den Rufnummern ist die externe Eingabe eines Passwortes erforderlich. Das Passwort kann beispielsweise auf einem Namen des Kindes in Kombination mit einer eindeutigen Kennung des mobilen Kommunikationsendgerätes basieren.

Aus der Figur 2 geht hervor, dass das Mikrophon 2 im Bereich einer Unterseite des mobilen Kommunikationsendgerätes angeordnet ist.

Die Darstellung von Figur 3 veranschaulicht eine Signalisierung eines Anrufs für das mobile Kommunikationsendgerät. Im dargestellten Ausführungsbeispiel ist die Ruftaste 6 dem Vater, die Ruftaste 7 der Mutter und die Ruftaste 8 der Großmutter des Kindes zugewiesen. Bei der Darstellung nach Figur 3 wird mittels eines Klingeltons, der der Ruftaste 7 zugeordnet ist, ein Anruf der Mutter des Kindes signalisiert. Eine Betätigung der Ruftaste 7 durch das Kind bewirkt eine Annahme des Anrufs, so dass eine Kommunikationsverbindung zwischen Mutter und Kind aufgebaut ist.

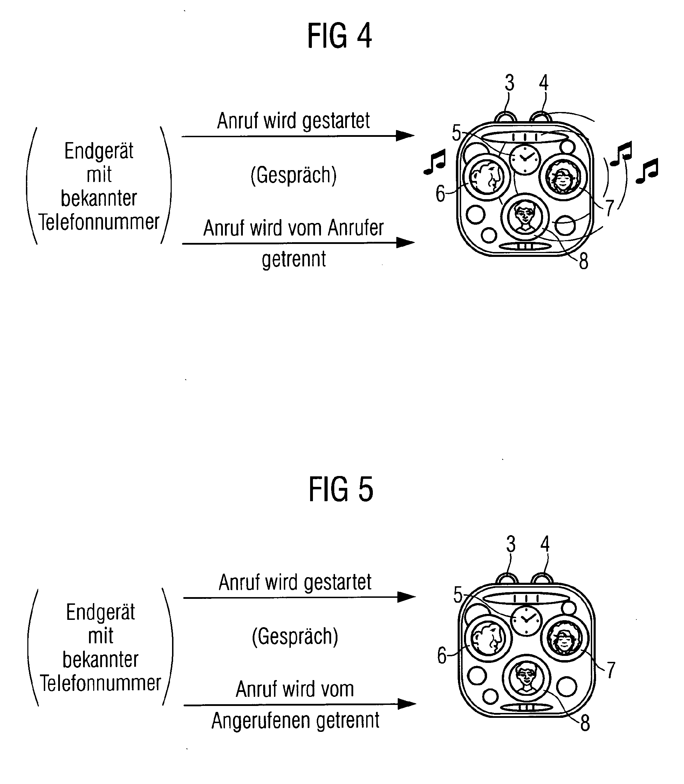

Der weitere Ablauf einer Kommunikationsverbindung wird anhand von Figur 4 erläutert. Nach Betätigung der Ruftaste 7 ist die Kommunikationsverbindung hergestellt. Das mobile Kommunikationsendgerät weist keine Mittel auf, um diese Kommunikationsverbindung zu unterbrechen bzw. zu beenden. Wie in Figur 4 zu sehen ist, wird eine Beendigung der Kommunikationsverbindung zwischen Mutter und Kind von dem Endgerät der Mutter mit bekannter Rufnummer aus beendet/getrennt, so dass eine Dauer der Kommunikationsverbindung ausschließlich im Einflussbereich eines Anrufers liegt.

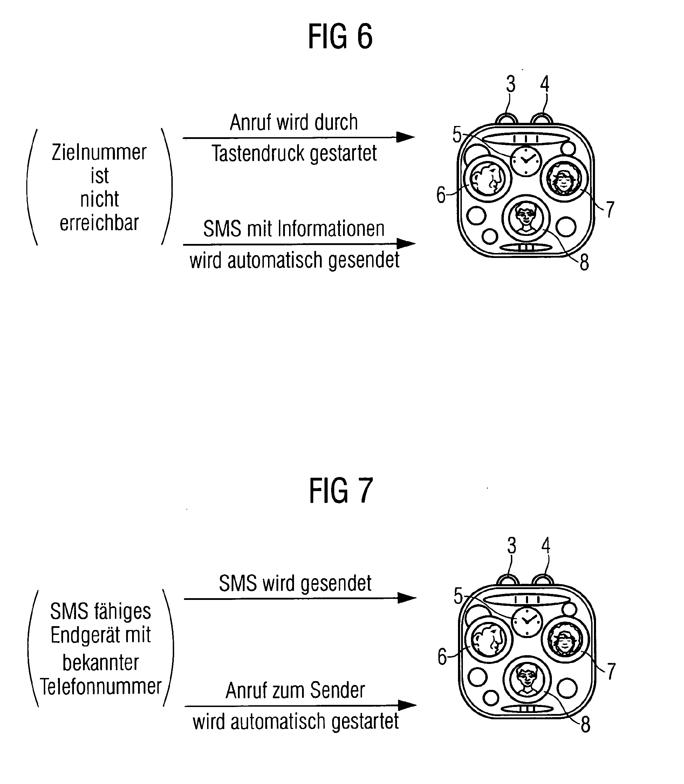

Die Darstellung der Figur 5 betrifft nun den Fall, dass ein Ruf von dem mobilen Kommunikationsendgerät aus gestartet wird, wobei der Ruf an ein Endgerät mit bekannter Telefonnummer erfolgt. Bei diesem Endgerät kann es sich nur um eines der Endgeräte handeln, deren Rufnummern den Ruftasten 6, 7, 8 zugeordnet sind. Eine Betätigung beispielsweise der Ruftaste 6, die der Rufnummer des Vaters des Kindes zugehörig ist, löst über ein Mobilkommunikationsnetzwerk und ggf. ein Festnetz eine Kommunikationsverbindung mit dem Vater aus. Sobald eine Annahme des Rufes vonstatten gegangen ist, ist die Kommunikationsverbindung hergestellt. Auch in diesem Fall kann der von dem mobilen Kommunikationsendgerät initiierte Anruf ausschließlich auf Seiten des Endgerätes mit bekannter Telefonnummer getrennt werden.

Bei einem alternativen Ausführungsbeispiel können die Ruftasten 6, 7, 8 derart ausgeführt und von dem Kommunikationsendgerät gesteuert sein, dass auch eine Beendigung einer Kommunikationsverbindung von dem Kommunikationsendgerät aus möglich ist. Hierzu ist ein Entsperren dieser Funktionalität mit Hilfe eines externen Computersystems über die Schnittstelle erforderlich. Selbstverständlich kann ein Teil der Ruftasten 6, 7, 8 ausschließlich Rufinitiierungs- und Rufannahmefunktionalität haben, während ein anderer Teil der Ruftasten 6, 7, 8 zusätzlich die Rufbeendigungsfunktionalität besitzt. In diesem Zusammenhang ist zu erwähnen, dass das mobile Kommunikationsendgerät dazu ausgebildet ist, mit Hilfe einer geeigneten Kennung festzustellen, dass ob bei einer gewünschten Kommunikationsverbindung zu einem gleichartigen weiteren Kommunikationsendgerät eines der beiden Kommunikationsengeräte eine Rufbeendigungsfunktionalität aufweist. Ist dies nicht der Fall, wird von vornherein eine Kommunikationsverbindung nicht aufgebaut.

Die nachfolgend erläuterten Figuren 6 und 7 betreffen Fälle, bei denen entweder eine Zielrufnummer für das mobile Kommunikationsendgerät oder das mobile Kommunikationsendgerät selbst nicht erreichbar sind, wobei vorausgesetzt wird, dass das mobile Kommunikationsendgerät über eine Funktionalität verfügt, die es gestattet, Kurzmitteilungen auszusenden und zu empfangen.

Bei der Ablaufdarstellung nach Figur 6 wird von dem mobilen Kommunikationsendgerät aus ein Ruf an eine der drei Rufnummern ausgelöst, die den drei Ruftasten 6, 7, 8 zugeordnet sind. Die gewünschte Rufnummer ist nicht erreichbar, beispielsweise besetzt. In einem solchen Fall verfügt das mobile Kommunikationsendgerät über eine beispielsweise in Software realisierte Einrichtung, die die Nichterreichbarkeit der gewünschten Rufnummer feststellt und das Aussenden einer Kurzmitteilung an dieselbe Rufnummer auslöst. Diese Kurzmitteilung enthält Positionsdaten, die beispielsweise mit Hilfe einer GPS-Einrichtung oder aufgrund von Mobilfunknetzdaten zur Verfügung stehen. Auf diese Weise wird sichergestellt, dass selbst in dem Fall, wenn zu einem späteren Zeitpunkt die Herstellung einer Kommunikationsverbindung zu dem mobilen Kommunikationsendgerät nicht möglich ist, die angerufene Bezugsperson des Kindes dessen letzten Aufenthaltsort zur Kenntnis nehmen kann.

Anhand der Figur 7 wird nunmehr erläutert, wie der Ablauf für den Fall vonstatten geht, wenn aus irgendeinem Grund das mobile Kommunikationsendgerät selbst für einen Ruf zwar erreichbar ist, der Ruf jedoch nicht angenommen wird. Von einem für die Aussendung von Kurzmitteilungen ausgelegten Endgerät aus kann dann eine Kurzmitteilung an das mobile Kommunikationsendgerät erfolgen, wobei dieses das Eintreffen der Kurzmitteilung mit Hilfe beispielsweise geeigneter Software derart umsetzt, dass von dem mobilen Kommunikationsendgerät aus ein Ruf zu dem Endgerät (der zugelassenen Rufnummer) erfolgt, so dass schnellstmöglich eine Kommunikationsverbindung hergestellt wird. Auf diese Weise wird ein automatischer Rückruf des mobilen Kommunikationsendgerätes zu dem Endgerät initiiert, von dem es einen Ruf erhalten hat, der jedoch nicht angenommen worden ist.

Die anhand von Figur 7 dargestellte Funktionalität des mobilen Kommunikationsendgerätes kann auch dafür ausgenutzt werden, dass das Kommunikationsendgerät nicht dauerhaft an dem ihm zugeordneten Mobilkommunikationsnetzwerk angemeldet ist. Eine Anmeldung bei dem Mobilkommunikationsnetzwerk erfolgt nur dann, wenn entweder von dem Kommunikationsendgerät aus ein Anruf aufgebaut werden soll oder es von einem Kurzmitteilungs-Server eine Kurzmitteilung erhält, die einer der drei zugelassenen Rufnummern zugeordnet ist. Zu diesem Zweck kann sich das Kommunikationsendgerät, von abgehenden Rufen abgesehen, in regelmäßigen Abständen, beispielsweise in Zeitintervallen von 5, 10, 15, 30 oder 60 Minuten, bei dem Mobilkommunikationsnetzwerk anmelden und etwaige vorhandene Kurzmitteilungen von dem zugelassenen Rufnummern abrufen. Ein Abruf von Kurzmitteilungen, die von Rufnummern stammen, die zugelassen sind, löst dann ggf. unter Berücksichtigung einer Prioritätsliste, eine automatische Auslösung eines ausgehenden Rufs aus.

Alternativ ist es auch möglich, dass das Kommunikationsendgerät in einer permanenten Verbindung zu seinem Mobilkommunikationsnetzwerk steht, so dass seine zeitlich durchgehende Erreichbarkeit gegeben ist.

## Patentansprüche

1. Mobiles Kommunikationsendgerät für Kinder mit einer Sende-/Empfangseinrichtung für Kommunikationsverbindungen, einem Mikrophon, einem Lautsprecher und einer Mehrzahl Tasten zur Bedienung des Kommunikationsendgerätes,
**dadurch gekennzeichnet, dass**
wenigstens ein Teil der Tasten als Ruftasten (6, 7, 8) ausgebildet ist, wobei jeder Ruftaste (6, 7, ,8) eine Rufnummer aus einer abgeschlossenen Gruppe von Rufnummern, die jeweiligen Teilnehmern zugehörig sind, zugeordnet ist und jede Ruftaste sowohl zum Auslösen als auch zur Annahme eines Rufs zu/von dem zugeordneten Teilnehmer eingerichtet ist.

2. Kommunikationsendgerät nach Anspruch 1,
**dadurch gekennzeichnet, dass**
es derart ausgebildet ist, dass eine aktive Kommunikationsverbindung mit einer der Rufnummern ausschließlich von dem dieser Rufnummer zugeordneten Teilnehmer zu beenden ist.

3. Kommunikationsendgerät nach Anspruch 1 oder 2,
**dadurch gekennzeichnet, dass**
jede Ruftaste (6, 7, 8) mit einer namentlichen/bildlichen Wiedergabe desjenigen Teilnehmers versehen ist, dessen Rufnummer der Ruftaste zugeordnet ist.

4. Kommunikationsendgerät nach Anspruch 3,
**dadurch gekennzeichnet, dass**
die Ruftasten (6, 7, 8) durchsichtig ausgeführt sind und
die Wiedergabe auf einer jeweiligen Innenseite der Ruftasten vorgesehen ist, wobei die Ruftasten (6, 7, 8) lösbar befestigt sind.

5. Kommunikationsendgerät nach einem der Ansprüche 1 - 3,
**dadurch gekennzeichnet, dass**
insgesamt drei Ruftasten (6, 7, 8) vorgesehen sind.

6. Kommunikationsendgerät nach einem der Ansprüche 1 - 5,
**dadurch gekennzeichnet, dass**
das Mikrophon (2) für einen Freisprechbetrieb ausgelegt ist.

7. Kommunikationsendgerät nach einem der Ansprüche 1 - 6,
**dadurch gekennzeichnet, dass**
der Lautsprecher (1) für einen Freisprechbetrieb ausgelegt ist.

8. Kommunikationsendgerät nach einem der Ansprüche 1 - 7,
**dadurch gekennzeichnet, dass**
für eine Lautstärkeregelung des Lautsprechers (1) eine von Null verschiedene Untergrenze festgelegt ist.

9. Kommunikationsendgerät nach einem der Ansprüche 1 - 8,
**dadurch gekennzeichnet, dass**
es eine Zeitanzeigeeinrichtung (5) aufweist.

10. Kommunikationsendgerät nach einem der Ansprüche 1 - 8,
**dadurch gekennzeichnet, dass**
es derart ausgeführt ist, dass zur Festlegung/Änderung der Rufnummern für die Ruftasten (6, 7, 8) eine Eingabe mindestens eines Passwortes erforderlich ist.

11. Kommunikationsendgerät nach einem der Ansprüche 1 - 10,
**dadurch gekennzeichnet, dass**
es zum Aussenden und zum Empfang von Kurzmitteilungen ausgeführt ist.

12. Kommunikationsendgerät nach Anspruch 11,
**dadurch gekennzeichnet, dass**
es eine Erfassungseinrichtung aufweist, die feststellt, ob eine beabsichtigte Kommunikationsverbindung zu einem der Teilnehmer hergestellt werden kann und eine Aussendung einer Kurzmitteilung zu diesem Teilnehmer auslöst, wenn die Kommunikationsverbindung nicht hergestellt werden kann.

13. Kommunikationsendgerät nach Anspruch 11 oder 12,
**dadurch gekennzeichnet, dass**
von ihm ausgesandte Kurzmitteilungen Positionsinformationen des Kommunikationsendgerätes enthalten.

14. Kommunikationsendgerät nach einem der Ansprüche 11 - 13,
**dadurch gekennzeichnet, dass**
es derart ausgeführt ist, dass es bei Empfang einer Kurzmitteilung von einem der Teilnehmer automatisch eine Kommunikationsverbindung zu diesem Teilnehmer herstellt.

15. Kommunikationsendgerät nach einem der Ansprüche 11 - 14,
**dadurch gekennzeichnet, dass**
es hinsichtlich Zeitintervallen zwischen Zeitpunkten, zu denen es sich automatisch bei dem ihm zugeordneten Mobilkommunikationsnetzwerk anmeldet, einstellbar und zur Abfrage von Kurzmitteilungen zu diesen Zeitpunkten ausgeführt ist.

16. Kommunikationsendgerät nach Anspruch 15,
**dadurch gekennzeichnet, dass**
es zum Erfassen des Eingangs einer Kurzmitteilung ausgebildet ist.

17. Kommunikationsendgerät nach einem der Ansprüche 1 - 16,
**dadurch gekennzeichnet, dass**
es eine Vergleichseinrichtung zum Vergleichen von Rufnummern eingehender Rufe und den den Ruftasten (6, 7, 8) zugeordneten Rufnummern aufweist und zum Sperren fremder Rufe ausgebildet ist.

18. Kommunikationsendgerät nach einem der Ansprüche 1 - 17,
**dadurch gekennzeichnet, dass**
die Ruftasten (6, 7, 8) wenigstens teilweise außerdem zum Beenden einer Kommunikationsverbindung ausgeführt sind.

19. Kommunikationsendgerät nach Anspruch 18,
**dadurch gekennzeichnet, dass**
es derart ausgebildet ist, dass eine Freischaltung einer der Ruftasten (6, 7, 8) ausschließlich von extern vorgenommen werden kann.

20. Kommunikationsendgerät nach einem der Ansprüche 1 - 19,
**dadurch gekennzeichnet, dass**
es zum Feststellen des Vorhandenseins einer Rufbeendigungsfunktionalität eines gleichartigen Kommunikationsendgerätes ausgeführt ist.
